# EUROPÄISCHE PATENTANMELDUNG

(11) **EP 1 393 949 A1**
(43) Veröffentlichungstag der Anmeldung: **03.03.2004**
(21) Anmeldenummer: 03103215.4
(22) Anmeldetag: 22.08.2003
(51) Int. Cl.: B60J 10/00, B60J 10/04

(54) **Dichtungsanordnung, insbesondere zum Abdichten einer an einem Kraftfahrzeug angeordneten Verkleidung**

(30) Priorität: 26.08.2002 DE 10239076
(71) Anmelder: Metzeler Automotive Profile Systems GmbH, 88131 Lindau/Bodensee (DE)
(72) Erfinder: Staus, Dr. Steffen, 88131, Lindau (DE); Brocke, Rolf, 88239, Wangen (DE)
(74) Vertreter: Schober, Christoph D.

(57) **Zusammenfassung**

Eine Dichtungsanordnung ist mit einer Verkleidung (14) und einer Dichtung (20) versehen. Die Dichtung (20) weist einen Dichtungsabschnitt (21) und einen Befestigungsabschnitt (22) auf. Der Dichtungsabschnitt (21) ist mit einer schwenkbar angeordneten Dichtungslippe (23) und einer der Dichtungslippe (23) vorauseilenden Anschlaglippe (24) versehen. Die Dichtungslippe (23) ist bei einem Kontakt der Anschlaglippe (24) mit dem Karosserieteil (14) von einer ersten Stellung (I) in eine an dem Karosserieteil (14) anliegende zweite Stellung (II) schwenkbar. Um ein gezieltes Schwenken und eine vergleichsweise große Anpreßkraft der Dichtungslippe (23) zu erzielen, weist die Anschlagli ppe (24) einen ersten Schenkel (25) und einen sich in der ersten Stellung (I) unter einem Winkel (α) zu dem ersten Schenkel (25) erstreckenden zweiten Schenkel (26) auf. Der erste Schenkel (25) ist an einem Ende mit der Dichtungslippe (23) und am anderen Ende mit dem zweiten Schenkel (26) verbunden. Der zweite Schenkel (26) ist durch das Karosserieteil (14) derart verformbar, daß der erste Schenkel (25) die Dichtungslippe (23) von der ersten Stellung (I) in die zweite Stellung (II) bewegt.

## Beschreibung

Die Erfindung betrifft eine Dichtungsanordnung, insbesondere zum Abdichten einer an einem Kraftfahrzeug angeordneten Verkleidung. Die Dichtungsanordnung verfügt über ein Karosserieteil und eine Dichtung, die einen Dichtungsabschnitt und einen Befestigungsabschnitt aufweist. Der Dichtungsabschnitt ist mit einer schwenkbar angeordneten Dichtungslippe und einer der Dichtungslippe vorauseilenden Anschlaglippe versehen. Die Dichtungslippe ist bei einem Kontakt der Anschlaglippe mit dem Karosserieteil von einer ersten Stellung in eine an dem Karosserieteil anliegende zweite Stellung schwenkbar.

Eine derartige Dichtungsanordnung wird in der WO 01/87658 A1 beschrieben. Die bekannte Dichtungsanordnung dient dazu, eine verfahrbare Fensterscheibe eines Kraftfahrzeugs gegenüber einem die Fensterscheibe aufnehmenden Schacht einer Tür des Kraftfahrzeugs abzudichten. Zu diesem Zweck setzt sich die bekannte Dichtungsanordnung aus einer äußeren Dichtung, die auf einem der Außenseite des Kraftfahrzeugs zugewandten Flansch des Schachts befestigt ist, und einer inneren Dichtung, die auf einem dem Fahrgastraum des Kraftfahrzeugs zugewandten Flansch des Schachts befestigt ist, zusammen. Die innere Dichtung weist eine schwenkbar angeordnete Dichtungslippe auf, die zum Abdichten einer in dem Fahrgastraum des Kraftfahrzeugs angeordneten Verkleidung dient. Die innere Dichtung ist zudem mit einer der Dichtungslippe vorauseilenden Anschlaglippe versehen, die annähernd orthogonal von der Dichtungslippe absteht. Die Anschlaglippe ist derart angeordnet, daß bei der Montage die Verkleidung zunächst mit der Anschlaglippe in Berührung gelangt. Die Anschlaglippe fungiert auf diese Weise als Mitnehmer, der die schwenkbewegliche Dichtungslippe an die Verkleidung drückt. Ein dichtes Anliegen der Dichtungslippe an der Verkleidung wird somit erreicht.

Als nachteilig hat sich bei der bekannten Dichtungsanordnung die mangelnde Variabilität in Hinsicht auf die Montage der Verkleidung erwiesen. Denn die Anschlaglippe übt ihre Funktion als Mitnehmer nur dann aus, wenn die Verkleidung vornehmlich orthogonal zur Anschlaglippe bewegt wird. Darüber hinaus hat sich als unbefriedigend herausgestellt, daß die Anpreßkraft, mit der die Dichtungslippe an die Verkleidung gedrückt wird, unzureichend ist.

Der Erfindung liegt die Aufgabe zugrunde, eine Dichtungsanordnung der eingangs genannten Art dahingehend weiterzubilden, daß sich auf einfache Weise ein gezieltes Schwenken und eine vergleichsweise große Anpreßkraft der Dichtungslippe erzielen läßt.

Zur Lösung dieser Aufgabe ist bei einer Dichtungsanordnung mit den oben genannten Merkmalen in Übereinstimmung mit Anspruch 1 erfindungsgemäß vorgesehen, daß die Anschlaglippe einen ersten Schenkel und einen sich in der ersten Stellung unter einem Winkel zu dem ersten Schenkel erstreckenden zweiten Schenkel aufweist. Der erste Schenkel ist an einem Ende mit der Dichtungslippe und am anderen Ende mit dem zweiten Schenkel verbunden. Der zweite Schenkel ist durch das Karosserieteil derart verformbar, daß der erste Schenkel die Dichtungslippe von der ersten Stellung in die zweite Stellung bewegt.

Die erfindungsgemäße Dichtungsanordnung beruht auf der Erkenntnis, daß die Ausgestaltung der Anschlaglippe mit einem ersten Schenkel und einem sich unter einem Winkel zu diesem erstreckenden zweiten Schenkel eine im Vergleich zum Stand der Technik höhere Variabilität in Hinsicht auf die Montage eines Karosserieteils, etwa einer Verkleidung im Fahrgastraum eines Kraftfahrzeugs, ermöglicht. Grund hierfür ist in erster Linie, daß eine gezielte Schwenkbewegung der Dichtungslippe hauptsächlich durch eine Verformung des zweiten Schenkels hervorgerufen wird, wohingegen der erste Schenkel vornehmlich die Funktion eines die Kraft übertragenden Hebels ausübt. Eine Verformung des zweiten Schenkels ist in der Regel auch dann möglich, wenn beispielsweise eine Verkleidung schräg auf die Anschlaglippe geführt wird. Überdies ergibt sich durch die Verformung des zweiten Schenkels eine Zugkraft in dem ersten Schenkel, die zu einer vergleichsweise hohen Anpreßkraft der Dichtungslippe an etwa einer Verkleidung führt.

Vorteilhafte Ausgestaltungen der erfindungsgemäßen Dichtungsanordnung stellen die Gegenstände der Ansprüche 2 bis 11 dar.

So ist es von Vorteil, wenn der erste Schenkel und der zweite Schenkel einen spitzen Winkel einschließen. Ein spitzer Winkel, bei dem das Winkelmaß weniger als 90° beträgt, erleichtert die Verformung des zweiten Schenkels, da sich dieser dann regelmäßig geneigt zur Richtung der von etwa einer Verkleidung auf die Anschlaglippe ausgeübten Kraft erstreckt. Ein gezieltes Schwenken der Dichtungslippe ist in diesem Fall selbst dann möglich, wenn etwa eine Verkleidung nahezu parallel zu dem ersten Schenkel auf die Anschlaglippe zubewegt wird.

In Hinsicht auf eine praxisgerechte Ausgestaltung ist es ferner von Vorteil, die Dichtungslippe und/oder den zweiten Schenkel an einer Verbindungsstelle mit dem Befestigungsabschnitt zu verbinden. Die Verbindungsstelle von Dichtungslippe und Befestigungsabschnitt bildet vorteilhafterweise einen Drehpunkt für die Dichtungslippe. Die Dichtungslippe wird auf diese Weise um den Drehpunkt von der ersten Stellung in die zweite Stellung verschwenkt.

In einer bevorzugten Weiterbildung der erfindungsgemäßen Dichtungsanordnung bilden die Dichtungslippe, der erste Schenkel, der zweite Schenkel und der Befestigungsabschnitt eine Hohlkammer. Die Hohlkammer trägt zu einer nach außen hin geschlossenen Ausgestaltung bei, die verhindert, daß Fremdkörper zwischen dem ersten Schenkel und dem zweiten Schenkel zu liegen kommen und damit die Verformungsfähigkeit des zweiten Schenkels beeinträchtigen. Ein zuverlässiges Anpressen der Dichtungslippe an etwa einer Verkleidung ist somit sichergestellt.

Bevorzugt weist die Dichtungslippe eine bestimmte Länge auf und ist der erste Schenkel in einem vorgegebenen Abstand von dem Befestigungsabschnitt mit der Dichtungslippe verbunden, wobei der Abstand vorzugsweise zwischen 0,25 % und 0,75 % der Länge der Dichtungslippe beträgt. Eine derartige Ausgestaltung weist den Vorteil auf, daß der erste Schenkel mit der Dichtungslippe an einer Stelle verbunden ist, die zum einen ein zuverlässiges Schwenken der Dichtungslippe und zum anderen eine ausreichende Anlagefläche der Dichtungslippe an etwa einer Verkleidung gewährleistet.

In einer bevorzugten Ausgestaltung der erfindungsgemäßen Dichtungsanordnung weist das Karosserieteil einen ersten Abschnitt, der in der zweiten Stellung an der Dichtungslippe anliegt, und einen zweiten Abschnitt, der in der zweiten Stellung an dem ersten Schenkel anliegt, auf, um eine funktionelle Entkopplung zu erreichen. Zu diesem Zweck ist es zudem von Vorteil, wenn der erste Abschnitt und der zweite Abschnitt der Verkleidung einen vorzugsweise spitzen Winkel einschließen.

Um eine zuverlässige Befestigung der Dichtung zu erreichen, ist in vorteilhafter Weise der Befestigungsabschnitt im Querschnitt annähernd U-förmig ausgestaltet und auf einen Flansch, vorzugsweise eines Kraftfahrzeugs, aufgesteckt.

Zu einer zuverlässigen Befestigung trägt zudem bei, wenn zweckmäßigerweise der Befestigungsabschnitt durch einen vorzugsweise metallenen Träger armiert ist. Der Träger gewährleistet eine ausreichende Steifigkeit des Befestigungsabschnitts und ermöglicht somit, die Dichtung in bevorzugter Ausgestaltung der erfindungsgemäßen Dichtungsanordnung aus einem elastisch verformbaren Werkstoff, vorzugsweise einem thermoplastischen Elastomer oder Ethylen-Propylen-Dien-Kautschuk (EPDM), zu extrudieren. Die Dichtung läßt sich auf diese Weise verhältnismäßig einfach und kostengünstig fertigen.

Einzelheiten und weitere Vorteile der erfindungsgemäßen Dichtungsanordnung ergeben sich aus der nachfolgenden Beschreibung eines bevorzugten Ausführungsbeispieles. In den das Ausführungsbeispiel lediglich schematisch darstellenden Zeichnungen veranschaulichen im einzelnen:
- Fig. 1: eine Seitenansicht eines Kraftfahrzeugs;
- Fig. 2: einen Querschnitt entlang der Linie II in Fig. 1 durch eine Dichtungsanordnung in einer ersten Stellung einer Dichtungslippe und
- Fig. 3: einen Querschnitt gemäß Fig. 2 in einer zweiten Stellung der Dichtungslippe.

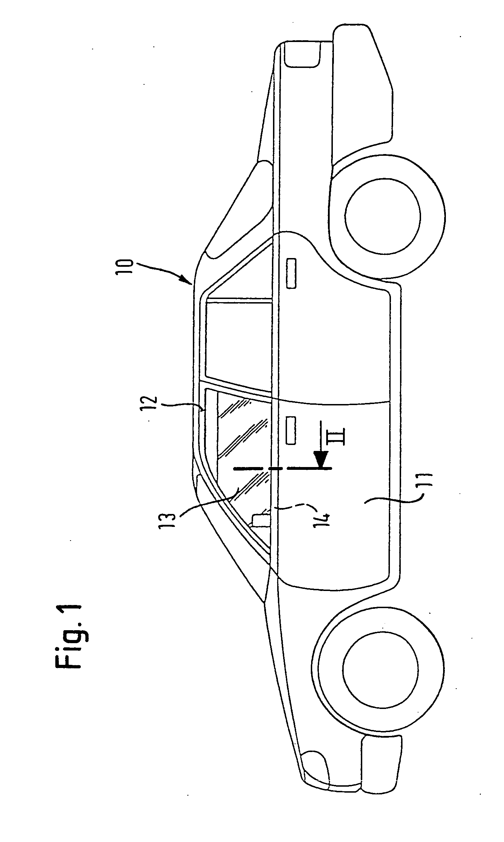

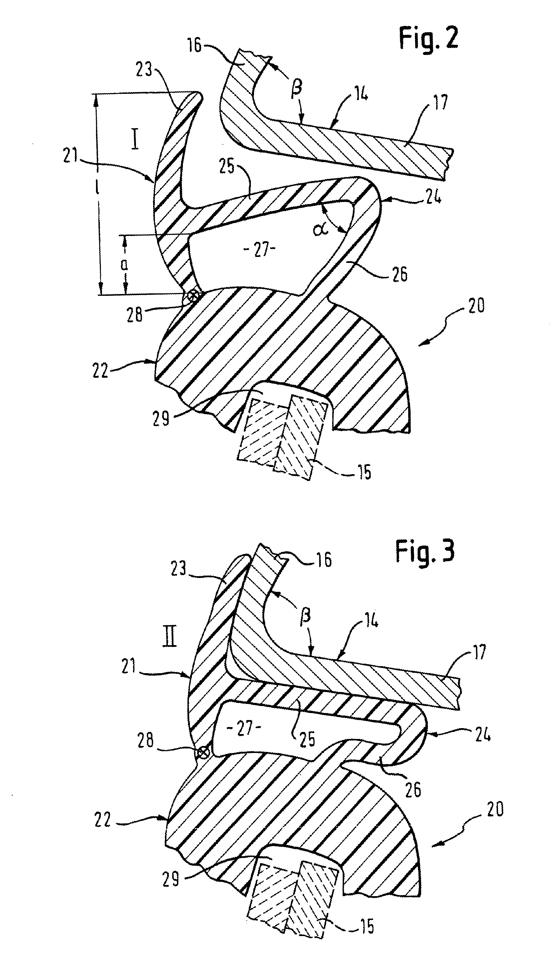

Das in Fig. 1 dargestellte Kraftfahrzeug 10 ist mit einer Tür 11 versehen, die einen Rahmen 12 aufweist. Innerhalb des Rahmens 12 ist eine Fensterscheibe 13 verfahrbar angeordnet. Die Fensterscheibe 13 wird durch eine Dichtung 20 abgedichtet, die an einem Flansch 15 der Tür 11 befestigt ist. Zu diesem Zweck weist die Dichtung 20 neben einem an der Innenseite der Fensterscheibe 13 anliegenden Abschnitt einen Befestigungsabschnitt 22 auf, der im Querschnitt annähernd U-förmig ausgestaltet ist. Der Befestigungsabschnitt 22 ist mit
einem in den Fig. 2 und 3 nicht gezeigten metallenen Träger armiert, um der etwa aus einem thermoplastischen Elastomer oder EPDM bestehenden Dichtung 20 im Bereich des Befestigungsabschnitts 22 eine in Hinsicht auf eine zuverlässige Befestigung ausreichende Steifigkeit zu verleihen. Der Befestigungsabschnitt 22 weist ferner eine Ausnehmung 29 auf, die auf den Flansch 15 gesteckt ist, wie aus den Fig. 2 und 3 ersichtlich ist. In der Ausnehmung 29 sind nicht dargestellte Haltelippen angeordnet, die den Befestigungsabschnitt 22 kraft- und/oder formschlüssig mit dem Flansch 15 verbinden.

Die in den Fig. 2 und 3 zu erkennende Dichtungsanordnung weist eine Verkleidung 14 auf, die im Inneren der Fahrgastzelle des Kraftfahrzeugs 10 an der Tür 11 befestigt ist. Die Verkleidung 14 wird durch einen Dichtungsabschnitt 21 der Dichtung 20 abgedichtet. Der Dichtungsabschnitt 21 ist mit einer um einen Drehpunkt 28 von einer ersten Stellung I in eine zweite Stellung II schwenkbaren Dichtungslippe 23 und einer der Dichtungslippe 23 vorauseilenden Anschlaglippe 24 versehen.

Wie die Fig. 2 und 3 ferner erkennen lassen, weist die Anschlaglippe 24 einen ersten Schenkel 25 und einen sich in der ersten Stellung I der Dichtungslippe 23 unter einem spitzen Winkel zu dem ersten Schenkel 25 erstreckenden zweiten Schenkel 26 auf. Der erste Schenkel 25 ist an einem Ende mit der Dichtungslippe 23 und am anderen Ende mit dem zweiten Schenkel 26 verbunden, wobei der zweite Schenkel 26 an einem Ende an dem Befestigungsabschnitt 22 angeformt ist. Die Dichtungslippe 23 hingegen ist in dem Drehpunkt 28 mit dem Befestigungsabschnitt 22 verbunden. Der erste Schenkel 25 ist in einem Abstand a an dem Befestigungsabschnitt 22 angeordnet. Der Abstand a beträgt in etwa 40 % der Länge I der Dichtungslippe 23. Auf diese Weise bildet die Dichtungslippe 23, der erste Schenkel 25, der zweite Schenkel 26 und der Befestigungsabschnitt 22 eine Hohlkammer 27.

Im eingebauten Zustand der Verkleidung 14 befindet sich die Dichtungslippe 23 in der zweiten Stellung II. Wie Fig. 3 erkennen läßt, liegt die Dichtungslippe 23 in der zweiten Stellung II dicht an der Verkleidung 14 an. In der ersten SteIlung I dagegen besteht zwischen der Dichtungslippe 23 und der Verkleidung 14 ein ausreichender Abstand, der eine einfache Montage der Verkleidung 14 gewährleistet, wie aus Fig. 2 ersichtlich ist. Für die Montage wird die Verkleidung 14 auf die Anschlaglippe 24 zubewegt. Bei Kontakt der Verkleidung 14 mit der Anschlaglippe 24 wird der zweite Schenkel 26 verformt. Durch die Verformung des zweiten Schenkels 26 tritt in dem ersten Schenkel 25 eine Zugkraft auf, welche die Dichtungslippe 23 von der ersten Stellung I in die zweite Stellung II bewegt. Die Dichtungslippe 23 wird dabei um den Drehpunkt 28 verschwenkt und gegen die Verkleidung 14 gepreßt. In der zweiten Stellung II liegt demzufolge die Dichtungslippe 23 dicht an einem ersten Abschnitt 16 der Verkleidung 14 an. Zugleich liegt ein zweiter Abschnitt 17 der Verkleidung 14 an dem ersten Schenkel 25 an, wie Fig. 3 erkennen läßt. Der erste Abschnitt 16 und der zweite Abschnitt 17 der Verkleidung 14 schließen einen spitzen Winkel ein. Dies hat zur Folge, daß die Verkleidung 14 im eingebauten Zustand, das heißt in der zweiten Stellung II, formschlüssig von der Dichtungslippe 23 und dem ersten Schenkel 25 umgriffen wird. Der Formschluß wirkt einem Zurückverformen des zweiten Schenkels 26 entgegen und trägt somit zu einem dauerhaften Verharren der Dichtungslippe 23 in der zweiten Stellung II bei.

Die zuvor beschriebene Dichtungsanordnung zeichnet sich durch ein gezieltes Schwenken und eine vergleichsweise große Anpreßkraft der Dichtungslippe 23 aus. Ursache hierfür ist vor allem die Verformung des zweiten Schenkels 26, die eine Zugkraft in dem ersten Schenkel 25 bewirkt und auf diese Weise die Dichtungslippe 23 gegen den ersten Abschnitt 16 der Verkleidung 14 preßt. Die durch ein Zubewegen der Verkleidung 14 auf die Anschlaglippe 24 bei der Montage erzeugte Verformung des zweiten Schenkels 26 hängt unter anderem maßgeblich von dem Winkel zwischen dem ersten Schenkel 25 und dem zweiten Schenkel 26 ab. Durch Variieren der Größe des Winkels läßt sich demzufolge das Verschwenken der Dichtungslippe 23 von der ersten Stellung I in die zweite Stellung II gezielt beeinflussen und damit die Anpreßkraft, mit der die Dichtungslippe 23 gegen den ersten Abschnitt 16 der Verkleidung 14 drückt, an den jeweiligen Anwendungsfall zielgerecht anpassen. Die Größe des Winkels läßt sich beispielsweise zum einen durch die Länge des ersten Schenkels 25 und zum anderen durch die Lage der Verbindungsstelle des zweiten Schenkels 26 mit dem Befestigungsabschnitt 22 variieren. Nicht zuletzt ermöglicht die durch die Dichtungslippe 23, die Anschlaglippe 24 und den Befestigungsabschnitt 22 gebildete Hohlkammer 27 ein ungehindertes, reversibles Verformen des zweiten Schenkels 26, so daß eine wiederholte Montage der Verkleidung 14, etwa für Wartungs- oder Reparaturzwecke, sichergestellt ist.

### Bezugszeichenliste

- 10: Kraftfahrzeug
- 11: Tür
- 12: Rahmen
- 13: Fensterscheibe
- 14: Verkleidung
- 15: Flansch
- 16: erster Abschnitt
- 17: zweiter Abschnitt

- 20: Dichtung
- 21: Dichtungsabschnitt
- 22: Befestigungsabschnitt
- 23: Dichtungslippe
- 24: Anschlaglippe
- 25: erster Schenkel
- 26: zweiter Schenkel
- 27: Hohlkammer
- 28: Drehpunkt
- 29: Ausnehmung

- a: Abstand
- I: Länge
Winkel
Winkel

- I: erste Stellung
- II: zweite Stellung

## Patentansprüche

1. Dichtungsanordnung, insbesondere zum Abdichten einer an einem Kraftfahrzeug (10) angeordneten Verkleidung (14), mit einem Karosserieteil (14) und einer Dichtung (20), die einen Dichtungsabschnitt (21) und einen Befestigungsabschnitt (22) aufweist, wobei der Dichtungsabschnitt (21) mit einer schwenkbar angeordneten Dichtungslippe (23) und einer der Dichtungslippe (23) vorauseilenden Anschlaglippe (24) versehen ist und wobei die Dichtungslippe (23) bei einem Kontakt der Anschlaglippe (24) mit dem Karosserieteil (14) von einer ersten Stellung (I) in eine an dem Karosserieteil (14) anliegende zweite Stellung (II) schwenkbar ist, **dadurch gekennzeichnet, daß** die Anschlaglippe (24) einen ersten Schenkel (25) und einen sich in der ersten Stellung (I) unter einem Winkel ( ) zu dem ersten Schenkel (25) erstreckenden zweiten Schenkel (26) aufweist, wobei der erste Schenkel (25) an einem Ende mit der Dichtungslippe (23) und am anderen Ende mit dem zweiten Schenkel (26) verbunden ist und wobei der zweite Schenkel (26) durch das Karosserieteil (14) derart verformbar ist, daß der erste Schenkel (25) die Dichtungslippe (23) von der ersten Stellung (I) in die zweite Stellung (II) bewegt.

2. Dichtungsanordnung nach Anspruch 1, **dadurch gekennzeichnet, daß** der erste Schenkel (25) und der zweite Schenkel (26) einen spitzen Winkel ( ) einschließen.

3. Dichtungsanordnung nach Anspruch 1 oder 2, **dadurch gekennzeichnet, daß** die Dichtungslippe (23) und/oder der zweite Schenkel (26) an einer Verbindungsstelle (28) mit dem Befestigungsabschnitt (22) verbunden sind.

4. Dichtungsanordnung nach Anspruch 3, **dadurch gekennzeichnet, daß** die Verbindungsstelle von Dichtungslippe (23) und Befestigungsabschnitt (22) einen Drehpunkt (28) für die Dichtungslippe (23) bildet.

5. Dichtungsanordnung nach Anspruch 3 oder 4, **dadurch gekennzeichnet, daß** die Dichtungslippe (23), der erste Schenkel (25), der zweite Schenkel (26) und der Befestigungsabschnitt (22) eine Hohlkammer (27) bilden.

6. Dichtungsanordnung nach einem der Ansprüche 3 bis 5, **dadurch gekennzeichnet, daß** die Dichtungslippe (23) eine Länge (I) aufweist und der erste Schenkel (25) in einem vorgegebenen Abstand (a) von dem Befestigungsabschnitt (22) mit der Dichtungslippe (23) verbunden ist, wobei der Abstand (a) vorzugsweise zwischen 0,25 % und 0,75 % der Länge (I) der Dichtungslippe (23) beträgt.

7. Dichtungsanordnung nach einem der Ansprüche 1 bis 6, **dadurch gekennzeichnet, daß** das Karosserieteil (14) einen ersten Abschnitt (16), der in der zweiten Stellung (II) an der Dichtungslippe (23) anliegt, und einen zweiten Abschnitt (17), der in der zweiten Stellung (II) an dem ersten Schenkel (25) anliegt, aufweist.

8. Dichtungsanordnung nach Anspruch 7, **dadurch gekennzeichnet, daß** der erste Abschnitt (16) und der zweite Abschnitt (17) der Verkleidung (14) einen vorzugsweise spitzen Winkel ( ) einschließen.

9. Dichtungsanordnung nach einem der Ansprüche 1 bis 8, **dadurch gekennzeichnet, daß** der Befestigungsabschnitt (22) im Querschnitt annährend U-förmig ausgestaltet und auf einen Flansch (15), vorzugsweise eines Kraftfahrzeugs (10), aufgesteckt ist.

10. Dichtungsanordnung nach einem der Ansprüche 1 bis 9, **dadurch gekennzeichnet, daß** der Befestigungsabschnitt (22) durch einen vorzugsweise metallenen Träger armiert ist.

11. Dichtungsanordnung nach einem der Ansprüche 1 bis 10, **dadurch gekennzeichnet, daß** die Dichtung (20) aus einem elastisch verformbaren Werkstoff, vorzugsweise einem thermoplastischen Elastomer oder Ethylen-Propylen-Dien-Kautschuk, extrudiert ist.
